# EUROPEAN PATENT SPECIFICATION

(11) **EP 0 626 711 B1**
(45) Date of publication and mention of the grant of the patent: **30.07.1997**
(21) Application number: 94201432.5
(22) Date of filing: 20.05.1994
(51) Int. Cl.: H01H 71/02, H02B 1/26, H01H 83/22

(54) **A safety coupling device between two modular electric apparatus**
Sicherheitskupplung zwischen zwei modularen elektrischen Geräten
Un accouplement de sécurité de deux appareils électriques modulaires

(30) Priority: 26.05.1993 IT MI931085
(43) Date of publication of application: 30.11.1994
(73) Proprietor: BTICINO S.P.A., 20154 Milano (IT)
(72) Inventor: Pianezzola, Sergio, I-21100 Calcinate del Pesce, Varese (IT)
(74) Representative: Falcetti, Carlo

(56) References cited:
- EP-A- 0 051 755
- EP-A- 0 375 568
- DE-U- 8 807 464
- FR-A- 2 427 679
- FR-A- 2 512 582
- FR-A- 2 550 907

## Description

This invention relates to a safety coupling device coupling two modular electric apparatuses, so-called of the DIN type because intended for juxtaposed installation on a supporting rail conformant with that body of standards.

In particular, the invention relates to a safety coupling device coupling for example differential actuators and current switches.

As is known, differential actuators (for single-phase distribution systems) are electric apparatuses provided with a transformer having two bucking primary windings and a secondary winding for operating a release electromagnet of a manually wired-in device, mechanically coupleable to a switch to cause it to break upon operation of the differential. The structure is similar with three-phase systems.

While the switch is to be regarded as an essential component to a differential protection electric apparatus, differential actuators and switches are manufactured with separate modular units which are either factory assembled or assembled by the electric system installing contractor according to and in conformity with safety regulations.

This is dictated by the need to match, according to system requirements, the responsiveness and the hysteresis characteristics of the differential actuator, varying with application, to the capacity and operation times of the switches (usually maximum current and thermal protection switches), also varying.

To meet all possible user's demands with a limited range of products, therefore, the two components must be provided as separate modules, and the task of assembling the two modules to suit specific demands is left with the installer or technically qualified distribution outlet.

Assembly is to observe definite safety directions which provide inter alia the following requisites:
assembly is to be irreversible, and any attempt to disassembly should leave permanent traces and irreversible damage.

Assembly means here not only the mechanical coupling of two modules but also the necessary electric coupling.

The mechanical coupling means used should be bonded to one of the modules so as to prevent its loss and defeat attempts at replacing it with inappropriate ones.

The module interconnection terminals, between the differential and the switch module, as adequately insulated, should be integrated to the differential module and preferably protected.

Known are mechanical coupling devices for modular electric units, e.g. as described in Italian Patent Application No. 21764-B/87 (& DE-U-8807464), filed by this Applicant on 9.6.1987, bonded to one of the units, which do not meet the coupling irreversible requirement, however.

Similar mechanical coupling devices are described in Patent Application FR-A-2640422 (& EP-A-0375568).

This Application describes inter alia the use of a protective cover for terminals which prevents electrical disconnection of the two units; the cover is provided with a lead-seal device which should expectedly ensure unremovability from the module to which it is hooked. Separated coupling means is provided.

These solutions, besides failing to fully satisfy the requisites, are partial and specifically directed to provide a single functionality; thus, the mechanical coupling means, additionally to being reversible, serves no terminal protection function and do not prevent electrical disconnection of the components.

Conversely, the protective cover, while ensuring protection for the electric attachments and hindering electrical disconnection, serves no mechanical coupling function, even less an irreversible one.

The use of separate devices and expedients to meet the various requirements, therefore, makes the modular assembly apparatus complicated, expensive, and its assembly both troublesome and costly.

These drawbacks are obviated by the safety coupling device between two modular electric apparatus, forming the subject-matter of this invention, wherein a single element, irreversibly bonded to one of the two apparatus, jointly serves the function of an irreversible mechanical coupling element, protection of the terminals, and preclusion of any electric uncoupling attempts.

According to the invention these results are obtained by a coupling device coupling first and second electric apparatuses according to claim 1.

The device of the invention further provides, through the cover bonded to the first unit, an effective protection for electric terminals outgoing from the first unit and being pre-shaped, against possible mechanical stresses which would alter their configuration.

According to a preferred embodiment of the present invention, a first hooking tab provided on the protection cover is fitted slidably into a groove of the first unit provided with an inlet side undercut, to afford the cover, with the hooking tab slid to a position of maximum withdrawal from the groove of the first unit, a convenient rotation about an axis defined by the tab end, which allows easy effectuation of the electrical connections between the two units.

According to a further preferred embodiment of the invention, the first hooking tab, fitting slidably into a groove of the first unit, when slid to a position of maximum insertion into the groove, irreversibly engages, if the second unit has been properly juxtaposed to the first, with hooking teeth of the second unit which prevent sliding movement of the tab by locking it in a position of maximum insertion into the groove.

Further additional features and advantages of the invention will become more clearly apparent from the following description of a preferred embodiment of the invention and from the accompanying drawings, in which:
Figure 1 is an exploded perspective view of first and second modular electric apparatuses and of a preferred embodiment of a safety coupling device according to this invention and including a protection cover;
Figure 2 is an enlarged perspective view of a detail of the first electric apparatus shown in Figure 1 and of the protection cover, in the open position, the cover being the main element of the device forming the subject-matter of this invention;
Figure 3 shows in section, in the plane I-I of Figure 2, a detail of the first electric apparatus which provides a bond for the cover;
Figure 4 shows in section, in the plane II-II of Figure 3, the mechanical bond between the first electric apparatus and the cover;
Figure 5 is an exploded perspective view of a variant of details of the first and second electric apparatus, co-operating with the cover, for providing irreversible coupling between the two apparatuses;
Figure 6 shows in section, in the plane III-III of Figure 1, a detail of a first mechanical interconnection between the protection cover and the second electric apparatus;
Figure 7 shows in section, in the plane IV-IV of Figure 1, a detail of a second mechanical interconnection between the protection cover and the second electric apparatus.

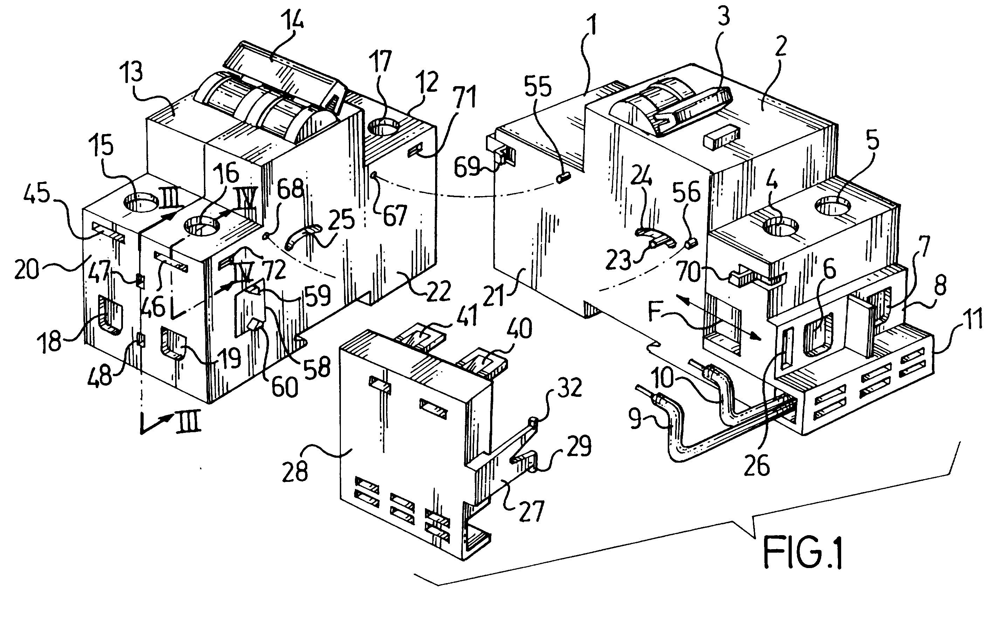

With reference to Figure 1, for simplicity and clarity of illustration, it pays to define some conventions of expressions to be used hereinafter.

Each of the two electric apparatuses to be coupled irreversibly is essentially composed of a body having the generic form of a right parallelepiped, with a back face adapted for coupling to an installation rail, as by means of suitable hooking teeth, a front juxtaposed to the back face, two juxtaposed side faces, a top face and a bottom face. The electric apparatuses are constructed for contact juxtaposition across a side face perpendicular to the apparatus installation rail.

In electric systems, more than two modular apparatuses would, in general, be juxtaposed beside one another.

Figure 1 shows a first electric apparatus 1, specifically a differential actuator, provided on the front 2 with a small mechanical resetting lever 3 and two cilindrical openings 4, 5 for receiving the clamp screw of two electrical connection terminals, not shown, wherein two electrical terminations are clamped which are introduced into the clamp terminals through two inlet openings 6, 7 present on the top face 8 (by convention) of the actuator.

Two output terminations 9, 10, for interconnection with the second break apparatus, are led out through the top face, in the proximity of the back face and are partly protected by a small screen 11 which forms a protection raceway, suitably perforated to allow the terminations to be cooled by air circulation.

The output terminations, of the insulated single-wire type, are conveniently pre-formed to enable insertion into the connection terminals of the apparatus with which the differential actuator 1 is to co-operate.

This is composed of a switch 12, provided on the front face 13 with a mechanical reset/release lever 14, a first pair of cylindrical openings 15, 16 for accommodating two terminal clamp screws, and a second pair of cylindrical openings, only one 17 being shown, for accommodating two terminal clamp screws.

Access to the terminals of the switch 12 is allowed for the terminations 9, 10 by two openings 18, 19 formed in the top face 20 of the switch.

When the differential actuator 1 and switch 12 are juxtaposed with their respective side faces 21 and 22 in contact, the two actuation units become mechanical interconnected, in a known manner, by means of a pin 23 which stands out of a slot 24 in the wall 21 and is inserted into a corresponding slot 25 in the wall 22, ensuring at least that the switch be open by operation of the differential protection, and optional slaving of the switch state to that of the differential protection.

The problem which is solved by the device forming the subject-matter of this invention is that of coupling the two modules 1 and 12 irreversibly.

For this purpose, the module 1 is provided with a groove or slit 26, with parallel opposite faces open on the top face and extending parallel to the side face 21 to form an engagement socket for a tab 27 of a protection cover 28.

The cover 28, made of the same insulative plastics material as the tab 27, extends in a perpendicular plane to that of the tab 27.

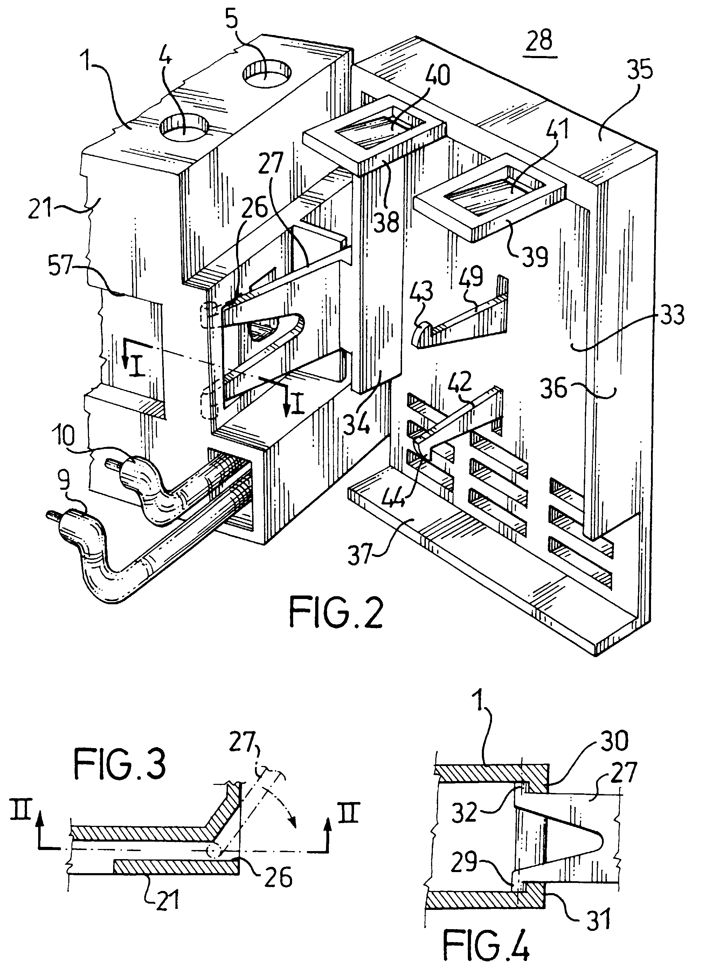

The tab 27, having a bifurcate end and being provided at the end with two engagement teeth 32, 29, fits by elastic deformation of the ends into the groove 26, where it can slide freely and bidirectionally along the direction indicated by the arrow F between a fully inserted position and a position of maximum withdrawal limited by interference of the teeth 32, 29 with two locking shoulders 30 and 31 (Figure 4) provided in the slit 26 at the top face. Thus, the cover 28 is bonded to the module 1 and occasional disengagement thereof is prevented.

This can only be intentional and requires compression of the bifurcate end of the tab and mutual approach of the teeth 32, 29, to allow its disengagement from the locking shoulders 30, 31.

Preferably, as shown in the sectional view of Figure 3, the slit 26 is conveniently undercut at the farthest edge of the side face 21 to afford, for the tab 27 and the cover 28, adequate rotation about an axis defined by the position of the teeth 32, 29, with the tab 27 disposed in the position of maximum withdrawal.

Figure 2 is a perspective view showing the unit 1 and cover 28 in the open position, with the tab 27 in the position of maximum withdrawal and maximum rotation relative to the sliding plane.

It will be appreciated that in this position the cover ensures comfortable access to the terminations 9, 10 for their insertion into the clamp terminals of a second switch module juxtaposed to module 1.

Conversely, it is apparent that with the tab 27 fully inserted into the slit 26, the cover 28 will set perpendicularly to the side face 21, and its rotation is prevented.

Under this condition, the cover is closed against the terminations 9, 10, which are received in the inner cavity of the cover and effectively protected thereby against incidental application of forces which could deform them.

This aspect is of special importance to the storage and transport of the product because it eliminates the need for rigid containers suitably patterned to ensure such protection.

The cover 28, as illustrated, consists of a half-shell with a cover plate 33 and four small sides 34, 35, 36, 37, the sides 34, 36 extending parallel to the tab 27 and the sides 35, 37 extending perpendicularly.

The tab 27 extends in continuation of the side 34, albeit at a further outward position from the cover frame comprising the small sides, such that the outer surface of the side 34 is flush with the side face 21 of the module 1, with the cover in the closed position.

The cover 28 is provided, in the proximity of the front side 35, with two cantilever extensions 38, 39, having two tabs 40, 41 formed inwards thereof, which tabs are attached cantilever-fashion to the free end of the extension 38, 39, these being also provided with a free end proximate to the free edge of the small side 35.

While the extensions 38, 39 extend in a parallel plane to the front surface of the modules, the tabs 40, 41 are appropriately inclined to present, at their ends, an irreversible hooking tooth interfitting in suitable sockets.

Although not indispensable, the cover plate 33 also has, extending within the half-shell, two cantilever lugs 49, 42 terminated with a pair of juxtaposed teeth 43, 44.

The side 34 carrying the tab 27 is suitably undercut to avoid interference of the side with the terminations 9, 10 coming out of the small chamber 11 of the module 1, with the cover 28 in the closed position.

Having thus considered the interaction of the cover 28 with the first module, we can now consider the interactions of the cover with the switch module 12 to show how the two modules are coupled by means of the cover.

The module 12 has (Figure 1), on the top face 20, two interfit slits 45, 46 extending inside the module parallel to the top face 13, and to a sufficient depth to accommodate the extensions 38, 39 of the cover 28 and, at the same time, span the full section of the cylindrical openings 15, 16 housing and giving access to clamp screws.

The module 12 also has again on the top face 20, two openings 47, 48 adapted to receive the end portion of the tabs 49, 42 and the teeth 43, 44.

Similarly to the instance of the slit 26, the openings 47, 48 are provided with a hooking shoulder co-operating with the teeth 43, 44 such that, once the tabs 39, 42 are inserted into their respective sockets, by elastic deformation of same, restoration of the tabs 43, 44 to their rest condition will cause the teeth to engage with the shoulder.

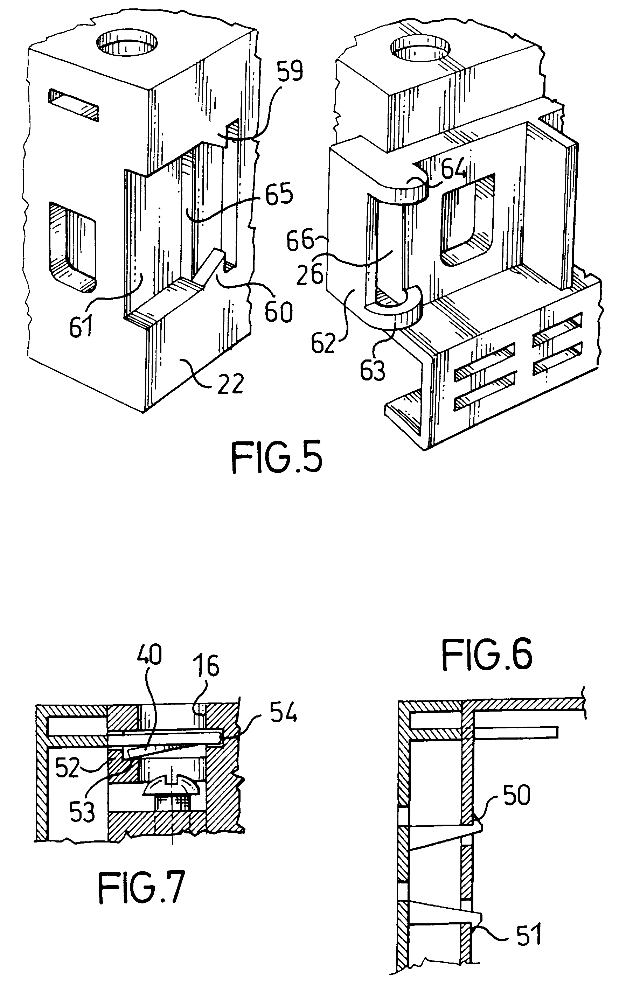

Figure 6 shows in partial section the module 12 in the plane III-III of Figure 1 in co-operation with the cover 28 and the interaction of the shoulders 50, 51 with the teeth 43, 44, and commands no further explanation.

The same expedient is envisaged, as shown in the section of Figure 7, for hooking the cover on the module 12 by means of the extensions 38, 39 and respective interfit tabs 40, 41.

Preferably, as shown in Figure 7, the holding shoulder 52 for the tab 40 is provided with a bearing flange 53 for the tab such that the latter, once inserted into the slit 46, interfits with the body of the module 12 at the end 54 and is supported at least at the free end, if not all along its periphery, to provide increased resistance to burglary efforts as exerted by a pressure force applied through the inlet of the housing 16.

A further element of mutual connection and positioning between the two modules consists of a pair of pins 55, 56 disposed on a side face 21 of the module 1 and co-operating with a pair of engagement sockets 67, 68 disposed on the side face 22 of the module 2.

Present on the face 21, at the side faces, are also two raised hooking teeth 69, 70, rigid with two slides sliding in suitable ways formed in the module 1. The teeth 69, 70 co-operate with corresponding openings 71, 72, present on the face 22 of the module 2.

Coupling the two modules by means of the connection elements described is a very simple matter.

After juxtaposing the two modules in proper relative positions, by inserting the pins 55, 56 into the sockets 67, 68 and hooking the teeth 69, 70 in the openings 71, 72, the terminations 9, 10 are inserted into the openings 18 and 19, with the cover open.

The respective clamp terminals are tightened by means of their respective clamp screws, driven through the openings 15, 16.

Then, the tab 27 is pushed into the slit 26 and simultaneously therewith, the extensions 40, 41 and tabs 49, 42 are pushed into their respective sockets until the teeth 43, 44 and tabs 40, 41 become engaged by the corresponding holding shoulders.

Thus, an irreversible mechanical bond is provided between the two modules, and by the same element protection for the terminals and closure of the openings 15, 16 are ensured to defeat any electrical disconnection attempts leaving no permanent burglary mark, such as broken tabs 40, 41.

In the solution described, the pin pair 55, 56 and teeth pair are provided not only for proper relative positioning between the two modules before actuating the safety coupling device, but also to prevent relative sliding of the two modules in the direction of the arrow F in Figure 1.

This relative sliding movement is, at least until the modules are hooked on the installation rail and absent other bonds, made possible by the freedom of axial sliding movement of the tab 27 in the slit 26.

It should be noted that the pin pair 55, 56 and socket pair 67, 68 can also serve a further useful function: since the position of the pins and the corresponding sockets, and their shape, may be selected as desired, it becomes possible to provide "keyed" configurations which allow coupling of the two modules with predetermined characteristics, e.g. a differential module and a switch having the same load capacity, thereby avoiding that a differential with a predetermined capacity be coupled to a lower capacity switch, or vice versa.

According to a further aspect of this invention, the use of the pin pair 55 and 56 is rendered wholly unnecessary or subsidiary by providing irreversible locking means which prevent the tab 27 from sliding once the coupling of the two modules is completed.

As shown in Figure 1 and Figure 2, the slit 26 is open to the side 21 with a window 57 which allows access to the end of the tab 27 once this is inserted, to some extent, into the slit 26.

At the window 57, which confronts a region of the wall 22 of the module 12 indicated by a dash line 58, the wall 22 has two raised teeth 59, 60 which, with the modules juxtaposed, fit into the window 57.

With the modules juxtaposed and the tab 27 pushed into the slit 26, the teeth 59, 60 interfere with the lugs 32, 29 of the tab urging them closer to each other.

With the tab 27 bottomed into the slit 26, the interference ceases to exist and the lugs 32, 29 resume their relative spacing at rest.

From now on, the teeth 59, 60 will irreversibly hinder withdrawal of the tab and prevent any relative sliding of the two modules.

The foregoing description only relates to a preferred embodiment, and many variants may be made thereunto without departing from the scope of the invention as defined by the appended claims.

As an example, the locking tabs 49, 42 and respective engagement sockets may be disposed in a different plane, perpendicular to the one shown, and the teeth 43, 44 may be internal rather than external.

In addition, the teeth 59, 60 may comprise a portion which interacts with a corresponding socket provided on the sides of the opening 57, to play the same role as the pin pair 55, 56, including the coupling key role.

Likewise, as shown in Figure 5, the slit 26 may be formed flush with the wall 21 or outside it rather than inside.

In this case, the unit 2 to be coupled would have, on the side face 22, a suitable recess 61 for accommodating the outer body 62 of the slit 26.

The recess 61, being provided with a step 65 co-operating with the corner 66 of the outer body 62, plays, together with the outer body 62, the same role as that of the pin pair 55, 56.

Preferably, in addition to the step 65, the recess 61 would accommodate the two teeth 59, 60 intended for irreversibly hooking the end of the tab 27, such that the mutual positioning and irreversible locking of the three elements is ensured integrally by the interaction of the tab 26 with the teeth 59, 60 and the interaction of the outer body 62 with the recess 61, step 65.

As a further variant, shown in Figure 5, the slit 26 may be provided with two semi-circular cantilever shoulders 63, 64 to permit rotation of the cover 28 without having to undercut the slit.

Furthermore, while the description and drawing figures relate to single-phase electric equipment, the invention is clearly not limited to that type of equipment.

## Claims

1. A safety coupling device coupling first (1) and second (12) electric apparatuses, the apparatuses being juxtaposed and coupled with a first side face (21,22) in contact and interconnected electrically with incoming and outgoing terminations (9,10) from a second face (8,20) lying crosswise to said first side face (21,22), comprising:
a protection cover (28) for said second face (20) of said second apparatus (12), said cover (28) being provided with a first element (27) for hooking into said first apparatus (1) and at least a second element (40,41) for hooking into said second apparatus (12);
bonding means (26) provided on said first apparatus (1) for unloosably bonding said first hooking element (27) into said first apparatus (1) and permitting relative travel of predetermined length of said cover (28) and said first apparatus (1) between first and second relative positions, along a predetermined direction (F) in the plane of said side face (21) of the first apparatus (1), said bonding means (26) allowing, for said second relative position, partial rotation of said cover (28) relative to said first apparatus (1); and
at least a hook-on socket (45,46) provided on said second apparatus (12) for irreversibly engaging said at least one second hooking element (40,41), said engagement and hook-on socket (45,46) intersecting with an opening (15,16) for access to electrical termination clamping members in said second apparatus (12), whereby the insertion of said second hooking element (40,41) into said engagement and hook-on socket (45,46) precludes access to said clamping members.

2. A device as in Claim 1, wherein said first hooking element (27) consists of a first resilient tab (27) carried cantilever-fashion on a side of said cover (28), said bonding means (26) consisting of a slit (26) open on said second face (21) and extending parallel to the plane of said side face and proximate thereto, said tab being provided with end teeth (29,32) co-operating with holding shoulders (30,31,(63,64)) of said slit.

3. A device as in Claim 2, wherein said slit (26) is undercut to allow for partial rotation of said tab (27) about an axis defined by said end teeth (29,32).

4. A device as in Claim 2, wherein said holding shoulders (63,64) jut out from said second face (8).

5. A device as in Claim 2, wherein said second hooking element (40,41) comprises a flat extension (38,39) carried cantilever-fashion on said cover (28) perpendicularly to the plane of said first tab (27), the free end of said extension (38,39) carrying cantilever-fashion a second tab (40,41) disposed inwardly of said extension (38,39) and lying in a slightly oblique plane on the plane of said extension (38,39) , said hook-on socket (45,46) in said second apparatus (12) being a slit lying crosswise to said access opening (15,16) provided with a hooking shoulder (52) for hooking to said second tab (40,41).

6. A device as in the preceding claims, wherein said first (1) and second (12) apparatuses are provided with a pin pair (55,56) and corresponding socket pair (67,68) co-operating, when the apparatuses (1,12) are juxtaposed, to prevent relative travel of the two apparatus in the juxtaposition plane in one sense along the relative travel direction of said cover (28).

7. A device as in the preceding claims, wherein said second apparatus (12) is provided with locking means (59,60) co-operating with said first hooking element (27) to irreversibly lock said first hooking element (27) in said first position with the apparatuses (1,12) juxtaposed and said first hooking element (27) shifted to said first position.

8. A device as in Claim 1, wherein said cover (28) comprises a rectangular cover plate framed in small sides (34,35,36,37), said first hooking element (27) being rigid with a first (34) of said small sides, said at least one second hooking element (40,41) being rigid with a second (35) of said small sides perpendicular to the first side (34).

9. A device as in Claim 8, wherein said first small side (34) is undercut for passing said terminations (9,10).

10. A device as in the preceding claims, wherein said first (1) and second (12) apparatus are provided with interacting means (55,56,67,68) of relative positioning for the apparatuses (1,12) effective to enable coupling of apparatuses having predetermined electrical characteristics and to prevent coupling of apparatuses (1,12) with electrical characteristics other than the predetermined ones.

## Patentansprüche

1. Ein Sicherheitskopplungsgerät, das eine erste (1) und eine zweite (12) elektrische Vorrichtung koppelt, wobei die Vorrichtungen mit einer ersten Seitenfläche (21, 22) nebeneinander angeordnet und gekoppelt und in Kontakt und mit von einer zweiten Fläche (8, 20) ankommenden und ausgehenden Anschlüssen (9, 10) elektrisch verbunden sind, die quer zu der ersten Seitenfläche (21, 22) angeordnet ist, mit folgenden Merkmalen:
einer Schutzabdeckung (28) für die zweite Seite (20) der zweiten Vorrichtung (12), wobei die Abdeckung (28) mit einem ersten Element (27) zum Einhaken in die erste Vorrichtung (1) und mit zumindest einem zweiten Element (40, 41) zum Einhaken in die zweite Vorrichtung (12) versehen ist;
einer Verbindungseinrichtung (26), die an der ersten Vorrichtung (1) vorgesehen ist, zum unlösbaren Verbinden des ersten Hakenelements (27) in der ersten Vorrichtung (1) und zum Zulassen einer relativen Bewegung mit vorbestimmter Länge der Abdeckung (28) und der ersten Vorrichtung (1) zwischen einer ersten und einer zweiten relativen Position, und zwar entlang einer vorbestimmten Richtung (F) in der Ebene der Seitenfläche (21) der ersten Vorrichtung (1), wobei die Verbindungseinrichtung (26) für die zweite relative Position eine Teildrehung der Abdeckung (28) bezüglich der ersten Vorrichtung (1) zuläßt; und
zumindest einem Einhaksockel (45, 46), der auf der zweiten Vorrichtung (12) vorgesehen ist, zum irreversiblen Ineingriffnehmen des zumindest einen zweiten Hakenelements (40, 41), wobei der Ineingriffnahme- und Einhaksockel (45, 46) eine Öffnung (15, 16) zum Zugriff auf elektrische Anschlußklemmbauglieder in der zweiten Vorrichtung (12) schneidet, wodurch das Einfügen des zweiten Hakenelements (40, 41) in den Ineingriffnahme- und Einhaksockel (45, 46) einen Zugriff auf die Klemmbauglieder ausschließt.

2. Ein Gerät gemäß Anspruch 1, bei dem das erste Hakenelement (27) aus einem ersten elastischen Streifen (27) besteht, der auf freitragende Art und Weise an einer Seite der Abdeckung (28) getragen wird, wobei die Verbindungseinrichtung (26) einen Schlitz (26) aufweist, der auf der zweiten Seite (21) offen ist, und der sich parallel zu der Ebene der Seitenfläche und in der Nähe derselben erstreckt, wobei der Streifen mit Endzähnen (29, 32) versehen ist, die mit Halteschultern (30, 31; 63, 64) des Schlitzes zusammenwirken.

3. Ein Gerät gemäß Anspruch 2, bei dem der Schlitz (26) unterschnitten ist, um eine Teildrehung des Streifens (27) um eine Achse zuzulassen, die durch die Endzähne (29, 32) definiert ist.

4. Ein Gerät gemäß Anspruch 2, bei dem die Halteschultern (63, 64) aus der zweiten Seite (8) herausragen.

5. Ein Gerät gemäß Anspruch 2, bei dem das zweite Hakenelement (40, 41) einen flachen Fortsatz (38, 39) aufweist, der auf freitragende Art und Weise an der Abdeckung (28) senkrecht zu der Ebene des ersten Streifens (27) getragen wird, wobei das freie Ende des Fortsatzes (38, 39) auf freitragende Art und Weise einen zweiten Streifen (40, 41) trägt, der innerhalb des Fortsatzes (38, 39) angeordnet ist und in einer etwas schrägen Ebene bezüglich der Ebene des Fortsatzes (38, 39) liegt, wobei der Einhaksockel (45, 46) in der zweiten Vorrichtung (12) ein Schlitz ist, der quer zu der Zugriffsöffnung (15, 16) liegt, die mit einer Hakenschulter (62) zum Haken an den zweiten Streifen (40, 41) versehen ist.

6. Ein Gerät gemäß einem der vorhergehenden Ansprüche, bei dem die erste (1) und die zweite (12) Vorrichtung mit einem Stiftpaar (55, 56) und mit einem entsprechenden zusammenwirkenden Sockelpaar (67, 68) versehen sind, wenn die Vorrichtungen (1, 12) nebeneinander angeordnet sind, um eine relative Bewegung der zwei Vorrichtungen in der Nebeneinanderpositionierungsebene in einem Sinn entlang der relativen Bewegungsrichtung der Abdeckung (28) zu verhindern.

7. Ein Gerät gemäß einem der vorhergehenden Ansprüche, bei dem die zweite Vorrichtung (12) mit einer Verriegelungseinrichtung (59, 60) versehen ist, die mit dem ersten Hakenelement (27) zusammenwirkt, um das erste Hakenelement (27) irreversibel an der ersten Position zu verriegeln, wobei die Vorrichtungen (1, 12) nebeneinander angeordnet sind, und wobei das erste Hakenelement (27) zu der ersten Position geschoben ist.

8. Gerät gemäß Anspruch 1, bei dem die Abdeckung eine rechteckige Abdeckungsplatte aufweist, die in kleinen Seiten (34, 35, 36, 37) gerahmt ist, wobei das erste Hakenelement (27) mit einer ersten (34) der kleinen Seiten starr ist, und wobei das zumindest eine zweite Hakenelement (40, 41) mit einem zweiten (35) der kleinen Seiten, die zu der ersten Seite (34) senkrecht ist, starr ist.

9. Ein Gerät gemäß Anspruch 8, bei dem die erste kleine Seite (34) unterschnitten ist, um die Anschlüsse (9, 10) durchzulassen.

10. Ein Gerät gemäß einem der vorhergehenden Ansprüche, bei dem die erste (1) und die zweite (12) Vorrichtung mit einer Interaktionseinrichtung (55, 56, 67, 68) zum relativen Positionieren der Vorrichtungen (1, 12) versehen sind, die wirksam ist, um eine Kopplung von Vorrichtungen mit vorbestimmten elektrischen Charakteristika zu ermöglichen, und um eine Kopplung von Vorrichtungen (1, 12) mit elektrischen Charakteristika, die von den vorbestimmten abweichen, zu verhindern.

## Revendications

1. Dispositif d'accouplement de sécurité accouplant des premier (1) et second (2) appareils électriques, les appareils étant juxtaposés et accouplés en contact par une première face latérale (21, 22) et interconnectés électriquement avec des terminaisons (9, 10) d'entrée et de sortie à partir d'une seconde face (8, 20) s'étendant transversalement à ladite première face latérale (21, 22), comportant :
un capot (28) de protection pour ladite seconde face (20) dudit second appareil (12), ledit capot (28) étant pourvu d'un premier élément (27) destiné à s'accrocher dans ledit premier appareil (1) et d'au moins un second élément (40, 41) destiné à s'accrocher dans ledit second appareil (12) ;
des moyens de liaison (26) situés sur ledit premier appareil (1) pour relier de façon non desserrable ledit premier élément d'accrochage (27) dans ledit premier appareil (1) et permettre un déplacement relatif d'une longueur prédéterminée dudit capot (28) et dudit premier appareil (1) entre des première et seconde positions relatives, suivant une direction prédéterminée (F) dans le plan de ladite face latérale (12) dudit premier appareil (1), ledit moyen de liaison (26) permettant, pour ladite seconde position relative, une rotation partielle dudit capot (28) par rapport audit premier appareil (1) ; et
au moins un alvéole d'accrochage (45, 46) situé sur ledit second appareil (12) pour s'enclencher de façon irréversible avec ledit ou chaque second élément d'accrochage (40, 41), ledit alvéole d'enclenchement et d'accrochage (45, 46) croisant une ouverture (15, 16) pour accéder à des éléments de serrage de terminaisons électriques dans ledit second appareil (12), grâce à quoi l'introduction dudit second élément d'accrochage (40, 41) dans ledit alvéole (45, 46) d'enclenchement et d'accrochage empêche l'accès auxdits éléments de serrage.

2. Dispositif selon la revendication 1, dans lequel ledit premier élément d'accrochage (27) consiste en une première patte élastique (27) portée en porte à faux sur un côté dudit capot (28), lesdits moyens de liaison (26) consistant en une fente (26) ouverte sur ladite seconde face (21) et s'étendant parallèlement au plan de ladite face latérale et à proximité de celle-ci, ladite patte étant pourvue de dents extrêmes (29, 32) coopérant avec des épaulements de retenue (30, 31 ; 63, 64) de ladite fente.

3. Dispositif selon la revendication 2, dans lequel ladite fente (26) est en contre-dépouille pour permettre une rotation partielle de ladite patte (27) autour d'un axe défini par lesdites dents extrêmes (29, 32).

4. Dispositif selon la revendication 2, dans lequel lesdits épaulements (63, 64) de retenue font saillie à l'extérieur de ladite seconde face (8).

5. Dispositif selon la revendication 2, dans lequel ledit second élément d'accrochage (30, 41) comporte une étendue plate (38, 39) portée en porte à faux sur ledit capot (28) perpendiculairement au plan de ladite première patte (27), l'extrémité libre de ladite étendue (38, 39) portant en porte à faux une seconde patte (30, 41) disposée vers l'intérieur de ladite étendue (38, 39) et s'étendant dans un plan légèrement oblique sur le plan de ladite étendue (38, 39), ledit alvéole d'accrochage (45, 46) dans ledit second appareil (12) étant une fente s'étendant transversalement à ladite ouverture d'accès (15, 16), pourvue d'un épaulement d'accrochage (52) pour un accrochage à ladite seconde patte (40, 41).

6. Dispositif selon les revendications précédentes, dans lequel lesdits premier (1) et second (2) appareils sont pourvus d'une paire d'ergots (55, 56) et d'une paire correspondante d'alvéoles (67, 68) coopérant, lorsque les appareils (1, 12) sont juxtaposés, pour empêcher un mouvement relatif des deux appareils dans le plan de juxtaposition dans un sens le long de la direction relative de déplacement dudit capot (28).

7. Dispositif selon les revendications précédentes, dans lequel ledit second appareil (12) est pourvu de moyens de verrouillage (59, 60) coopérant avec ledit premier élément d'accrochage (27) pour verrouiller de façon irréversible ledit premier élément d'accrochage (27) dans ladite première position avec les appareils (1, 12) juxtaposés et ledit premier élément d'accrochage (27) décalé vers ladite première position.

8. Dispositif selon la revendication 1, dans lequel ledit capot (28) comporte une plaque rectangulaire de capot encadrée de petits côtés (34, 35, 36, 37), ledit premier élément d'accrochage (27) étant rigide avec un premier (34) desdits petits côtés, ledit ou chaque second élément d'accrochage (40, 41) étant rigide avec un deuxième (35) desdits petits côtés perpendiculaire audit premier côté (34).

9. Dispositif selon la revendication 8, dans lequel ledit premier petit côté (34) est évidé pour le passage desdites terminaisons (9, 10).

10. Dispositif selon les revendications précédentes, dans lequel lesdits premier (1) et second (12) appareils sont pourvus de moyens d'interaction (55, 56, 67, 68) pour le positionnement relatif des appareils (1, 12), ayant pour effet de permettre l'accouplement d'appareils possédant des caractéristiques électriques prédéterminées et d'empêcher l'accouplement d'appareils (1, 12) possédant des caractéristiques électriques autres que celles qui sont prédéterminées.
